# FASCICULE DE BREVET EUROPEEN

(11) **EP 0 941 522 B1**
(45) Date de publication et mention de la délivrance du brevet: **04.09.2002**
(21) Numéro de dépôt: 97947128.1
(22) Date de dépôt: 24.11.1997
(51) Int. Cl.: G06T 9/00

(54) **PROCEDE ET DISPOSITIF DE COMPRESSION VIDEO**
VIDEOKOMPRESSIONSMETHODE UND VORRICHTUNG
METHOD AND DEVICE FOR VIDEO COMPRESSION

(30) Priorité: 28.11.1996 FR 9614601
(43) Date de publication de la demande: 15.09.1999
(73) Titulaire: THOMSON multimedia, 92648 Boulogne Cédex (FR)
(72) Inventeur: DUSSEUX, Jean-Christophe, F-92648 Boulogne Cedex (FR); GUILLOTEL, Philippe, F-92648 Boulogne Cedex (FR)
(86) Numéro de dépôt international: FR9702118
(87) Numéro de publication internationale: WO98024061

(56) Documents cités:
- GUENTER B K ET AL: "Motion compensated compression of computer animation frames" COMPUTER GRAPHICS PROCEEDINGS, PROCEEDING OF SIGGRAPH 20TH ANNUAL INTERNATIONAL CONFERENCE ON COMPUTER GRAPHICS AND INTERACTIVE TECHNIQUES. THE EYE OF TECHNOLOGY, ANAHEIM, CA, USA, 1-6 AUG. 1993, ISBN 0-89791-601-8, 1993, NEW YORK, NY, USA, ACM, USA, pages 297-304, XP000670799
- KNABE G: "QPEG software video technology for business, education, entertainment and multimedia communication" WIRELESS COMPUTER COMMUNICATION. EMERGING BUSINESS OPPORTUNITIES. PAPERS PRESENTED AT THE INTERNATIONAL CONFERENCE ON WIRELESS COMPUTER COMMUNICATION: EMERGING BUSINESS OPPORTUNITIES (INFOCOM'94), PROCEEDINGS OF INTERNATIONAL CONFERENCE ON WIRELESS C, ISBN 0-07-462419-9, 1995, NEW DELHI, INDIA, TATA MCGRAW-HILL, INDIA, pages 147-154, XP000670776
- RODRIGUEZ A A ET AL: "Scripting languages emerge in standards bodies" IEEE MULTIMEDIA, WINTER 1995, IEEE, USA, vol. 2, no. 4, ISSN 1070-986X, pages 88-92, XP000647430

## Description

La synthèse d'images permet de créer, à l'aide d'outils informatiques, des images dites virtuelles. Elles sont issues d'une description abstraite et de calculs numériques. Il s'agit d'utiliser un ensemble de méthodes à travers des librairies graphiques 2D et 3D, qui sont éventuellement accélérées par des circuits hardware spécifiques du type cartes graphiques accélératrices et via des interfaces convenues de type API pour "Application Program Interface" en anglo-saxon.

Le procédé de création de ces images peut être décomposé en différentes étapes.

Il comporte en premier lieu une phase de modélisation, c'est-à-dire d'élaboration ou acquisition d'objets utilisant un modèle de description, dont le but est de décrire les objets constitutifs et les assembler pour en construire une scène visualisable.

Citons par exemple le modèle de type polygonal où les objets sont décomposés en multitudes de polygones ou facettes élémentaires. Des primitives graphiques sont exploitées pour la définition, l'assemblage ou la modification de ces entités géométriques élémentaires.

Ces modèles sont interprétables : ils peuvent être associés à des sortes de moteurs graphiques, par exemple coloriage ("shading" en anglais) de triangles, anti aliasing de texture, etc. Ils ont des capacités, c'est-à-dire des propriétés ou compétences, tant comportementales, telles que mouvement, explosion, ..., que visuelles, telles que texture, couleur, effets de miroir... Ils vont pouvoir interagir avec leur environnement lors de la réalisation d'un scénario, par exemple avec les lumières, avec les autres objets. Il y a donc, dans un deuxième temps, la constitution d'une scène animée qui régit l'organisation globale de ces modèles au cours du temps (ici pris au sens de temps de réalisation d'une application donnée), c'est-à-dire la définition d'un scénario ou animation.

Enfin, suivant les applications (CAO, production d'images, simulation, etc.), la dernière étape consiste à créer des images numériques à partir de ce scénario. Cette ultime étape s'appelle le "rendering" en anglo-saxon ou méthode de "rendu" d'image qui a pour but de rendre la scène la plus réaliste possible. Elle peut être très coûteuse en terme de temps de calcul, et demander de fortes capacités de mémoire tant pour les modèles utilisés que pour les données liées aux programmes impliqués. Par exemple des méthodes de rendu telles que la radiosité ou le lancé de rayon permettent d'obtenir des images de qualité, mais à un coût encore élevé, les algorithmes de calcul mis en oeuvre étant très complexes.

La publication de GUENTER B.K. et al: "Motion compensated compression of computer animation frames", COMPUTER GRAPHICS PROCEEDINGS, PROCEEDINGS OF SIGGRAPH 20th ANNUAL INTERNATIONAL CONFERENCE ON COMPUTER GRAPHICS AND INTERACTIVE TECHNIQUES, 1-6 AUGUST 1993, pages 297-304 divulgue un procédé de compression de données numériques utilisant un script. Une trame de la séquence d'images est prédite pixel par pixel à partir des données mathématiques issues du script de synthèse et à partir de plusieurs trames précédentes. Ce procédé conduit ainsi à une compression des données géométriques associée à chaque pixel (profondeur et numéro d'objet), réduisant les problèmes de stockage.

Le volume d'informations représenté par les images numériques a donné lieu au développement de différents standards de compression tels que JPEG, H.263, MPEG-1, MPEG-2, et bientôt MPEG-4 permettant de manipuler, que ce soit pour le stockage ou la transmission, des volumes d'informations compatibles avec la technologie actuelle. La norme MPEG-2, aujourd'hui la plus générique, permet de compresser tous les formats existants d'images à l'aide de différents profils et niveaux définis dans la norme MPEG (en anglais "profiles and levels"), dont le plus connu, le MP@ML ("Main Profile at Main Level"), pour les images au format télévision conventionnelle. La structure des codeurs réalisant de telles compressions d'images vidéo, selon l'art connu, repose sur différents types d'images : Intra, Prédites ou Bidirectionnelles (I, P et B respectivement) dont la principale différence est le mode de prédiction temporel. Le coeur de codage est classique avec une décomposition fréquentielle basée sur la DCT (Transformée Cosinus Discrète ou "Discrète Cosine Transform" en anglo-saxon), suivie d'une quantification et d'un codage entropique, pour obtenir en sortie du codeur un train binaire devant respecter la norme, c'est-à-dire une syntaxe spécifique.

La prédiction temporelle s'effectue par estimation du mouvement entre images espacées dans le temps, sur la base de blocs d'images par exemple de taille 16x16 pixels. Le mouvement est déduit d'une corrélation entre le bloc de l'image courante et un bloc d'une fenêtre de recherche d'une image précédente ou suivante. Ensuite chaque bloc de taille 8x8 pixels de l'image est prédit avec le vecteur de déplacement calculé, et seule l'erreur entre l'estimée et l'originale est codée.

La compression de données que ce soit d'images classiques ou d'images de synthèse exploite donc les procédés classiques tels que l'estimation de mouvement. Les circuits réalisant de tels calculs et les circuits associés sont complexes et le coût d'une telle implémentation est élevé. Par exemple, les circuits d'estimation de mouvement et d'interpolation compensée en mouvement prennent part, pour une bonne moitié, à la complexité d'un codeur de type MPEG-2.

Les informations de mouvement, toujours selon les procédés classiques, ne correspondent pas toujours au mouvement réel. Il s'agit simplement de corrélations généralement sur des informations de luminance. Le fait que le champ de vecteurs que constituent les vecteurs mouvement d'une image ne reflète pas la réalité du mouvement ne permet pas une compression de données optimale, en particulier dans le cas de codage différentiel des vecteurs. En effet, pour des macroblocs correspondant à des zones à mouvement uniforme, le coût de transmission de vecteurs identiques ou peu différents, en codage différentiel, est plus faible que le coût de transmission de vecteurs aléatoires.

D'autre part, le fait que les vecteurs mouvement obtenus selon le procédé classique de "block matching" ne reflètent pas forcément le mouvement réel ne permet pas une exploitation du champ de vecteurs pour réaliser des interpolations ou extrapolations d'images de bonne qualité lors par exemple de conversions de fréquence, de modes ralenti de magnétoscope numérique, etc.

Un champ de vecteurs mouvement incorrect ne permet pas, également, d'exploiter les nouvelles techniques de codage utilisant les informations de contour d'une image plutôt que les macroblocs. En effet, la compression de données selon ces nouvelles techniques est basée sur la segmentation d'image et le déplacement réel de ces "segments" définissant les zones uniformes.

Ainsi, le manque de fiabilité de l'estimation de mouvement ne permet pas d'optimiser les performances du codeur en terme de taux de compression ou de qualité d'image pour un débit donné ou d'exploiter efficacement ces informations de mouvement au décodeur.

L'invention a pour but de pallier les inconvénients précités lors d'un codage d'images de synthèse.

A cet effet, elle a pour objet un procédé de compression de données numériques d'une séquence d'images de synthèse décrivant une scène objet d'un script, comportant une étape de traitement pour la modélisation de la scène à partir de données mathématiques, une étape de rendu d'image ("rendering" en anglo-saxon) pour la création d'une image de synthèse à partir de cette modélisation et un découpage en-blocs d'image de cette image de synthèse, un codage différentiel du bloc d'image courant à partir d'un bloc d'au moins une image de synthèse défini à partir d'au moins un vecteur mouvement pour fournir un bloc de résidu, caractérisé en ce que le vecteur mouvement est calculé à partir des données mathématiques issues du script de synthèse et définissant le mouvement apparent des différents objets constituant la scène objet de la séquence.

Elle a également pour objet un dispositif de compression de données numériques d'une séquence d'images de synthèse décrivant une scène objet d'un script, comprenant un circuit de traitement pour la modélisation de la scène dont les images sont à synthétiser à partir de données mathématiques, un circuit de rendu d'image et de découpage en blocs de l'image recevant les informations du circuit de traitement pour la réalisation d'une image de synthèse et le découpage en blocs d'images de l'image obtenue, un circuit de compensation de mouvement des blocs d'image recevant les informations du circuit de traitement pour fournir des blocs prédits, un soustracteur pour effectuer la différence entre le bloc courant provenant du circuit de rendu d'image et de découpage en blocs d'image et le bloc prédit provenant du circuit de compensation en mouvement pour fournir un bloc de résidu, un circuit de transformation cosinus discrète des blocs d'image provenant du circuit de rendu d'image et de découpage en blocs d'image ou des blocs résidus provenant du soustracteur, le choix étant effectué par un circuit de sélection de mode en fonction de critères énergétiques, un circuit de quantification des coefficients transformés, caractérisé en ce que le circuit de compensation en mouvement exploite les données mathématiques fournies par le circuit de traitement et traduisant le déplacement des objets modélisés constituant la scène pour calculer les vecteurs mouvement associés au bloc courant et définissant le bloc prédit.

Selon un autre mode de réalisation, elle a pour objet un dispositif de compression de données numériques d'une séquence d'images de synthèse décrivant une scène objet d'un script comprenant un circuit de traitement pour la modélisation de la scène dont les images sont à synthétiser à partir de données mathématiques, un circuit de rendu d'image et de découpage en blocs de l'image recevant les informations du circuit de traitement pour la réalisation d'une image de synthèse et le découpage en blocs d'images de l'image obtenue, un circuit de compensation en mouvement des blocs d'image recevant les informations du circuit de traitement, caractérisé en ce qu'il transmet en mode intra une image parmi N images de la séquence, N étant un nombre prédéterminé, cette image N étant celle objet du calcul de rendu par le circuit de calcul de rendu et de découpage en blocs d'images, en ce que les autres images sont transmises en mode inter par l'intermédiaire de blocs de résidu représentant la différence entre un bloc courant et un bloc prédit et en ce que des blocs de résidus sont nuls et définis par le seul vecteur mouvement calculé à partir des données mathématiques.

Les techniques de rendu d'image, d'une manière générale, se résument à traduire un scénario orienté "objet" en des images. Or le script, c'est-à-dire le scénario, comporte toutes les informations possibles concernant tant les objets dans la scène, que leurs diverses propriétés. Dans le cas de la synthèse d'images, un script 2D ou 3D donne le déplacement exact des objets dans le temps. Ce script sert ensuite à générer les images vidéo numériques finales (rendering). Ainsi, au lieu d'utiliser les informations que sont les pixels constituant une image visuelle, c'est-à-dire non modélisée, pour estimer le mouvement, sont utilisés les outils de modélisation pour calculer le mouvement réel dans la séquence d'images.

Outre la réduction de complexité, le fait d'utiliser le mouvement réel plutôt que le mouvement estimé permet d'améliorer la qualité de la prédiction et les performances globales du codeur.

D'autres particularités et avantages de l'invention apparaîtront clairement dans la description suivante donnée à titre d'exemple non limitatif et faite en regard des figures annexées qui représentent :
- la figure 1, l'architecture d'un dispositif de compression vidéo selon l'invention ;
- la figure 2, une architecture simplifiée d'un tel dispositif.

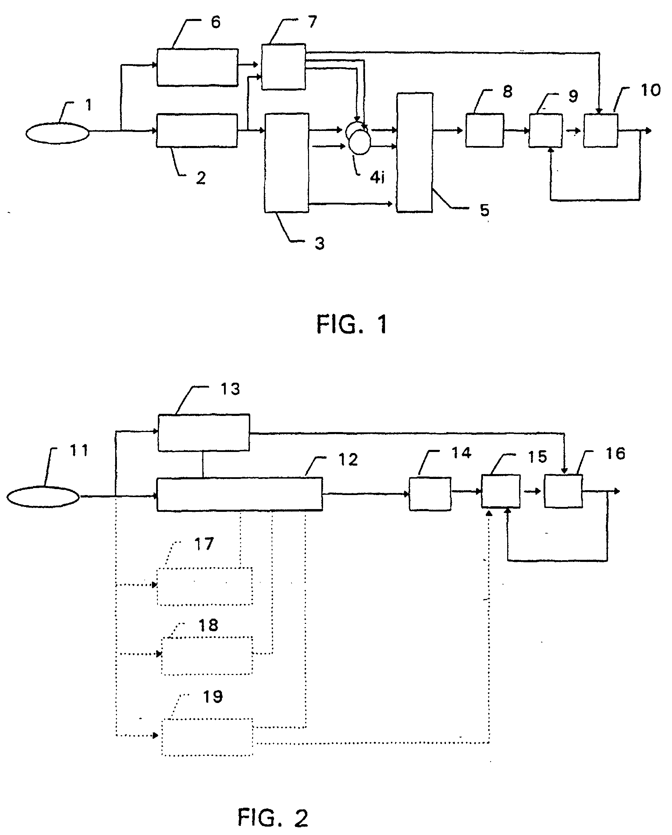

La figure 1 donne une description d'une première version du dispositif selon l'invention.

Comme expliqué précédemment, les calculs liés à la synthèse d'image sont d'une grande complexité et réalisés généralement par des stations de travail dédiées. C'est une telle station, appelée ici circuit de traitement 1 qui effectue une modélisation d'une scène préalablement définie à partir d'un script dans le but de créer ces images de synthèse représentatives de la scène objet du script. Les informations ainsi obtenues du circuit de traitement sont transmises en parallèle à un circuit de "rendu" d'image 2 et à un circuit d'interface 6. La sortie du circuit de rendu est reliée en parallèle à l'entrée d'un circuit de découpage en blocs d'images 3 et à une première entrée d'un circuit de compensation en mouvement 7.

Une première sortie du circuit de découpage est directement reliée à une première entrée d'un circuit de sélection de mode 5.

Une deuxième sortie i parmi n du circuit de découpage est reliée à une première entrée d'un soustracteur 4i parmi n. La sortie du soustracteur 4i est reliée à une deuxième entrée i parmi n du circuit de sélection de mode 5.

La sortie du circuit d'interface 6 est quant à elle reliée à une deuxième entrée du circuit de compensation en mouvement 7. Une sortie i parmi n de ce dernier est reliée à une deuxième entrée du soustracteur 4i.

La sortie du circuit de sélection de mode 5 est reliée à la sortie du dispositif à travers un circuit de calcul de Transformée Cosinus Discrète 8, un circuit de quantification 9, et un circuit de Codage en Longueur Variable 10 mis en série. La sortie du circuit de codage en longueur variable, qui est la sortie du dispositif, est également renvoyée sur une deuxième entrée du circuit de quantification 9 (incluant la régulation de débit). Une autre sortie du circuit de compensation en mouvement 7 est reliée à une deuxième entrée du circuit de codage en longueur variable 10. Dans cet exemple, la compensation de mouvement 7 s'effectue sans les images précédentes décodées, c'est-à-dire reconstruites. Des problèmes d'accumulation des erreurs de prédiction, phénomène connu sous le terme anglo-saxon de "drift", peuvent alors survenir. Pour améliorer le procédé, il est possible d'utiliser une boucle de contre-réaction avec quantification inverse, DCT inverse, fournissant au circuit de compensation 7 les images précédentes décodées.

Le circuit de traitement 1 symbolise donc les outils informatiques nécessaires à la formulation mathématique d'un scénario. Il a pour fonction, comme explicité précédemment, de modéliser une scène en trois dimensions, c'est-à-dire de définir les équations mathématiques des objets constituant la scène et de leurs mouvements définis par le script. Ces données mathématiques de modélisation peuvent également provenir de fichiers informatiques auxquels a accès le circuit de traitement et stockant par exemple des modèles prédéfinis.

Le circuit de rendu d'image a pour rôle de créer les images de synthèse. Il réalise la conversion en pixels à partir de la scène modélisée. Les informations numériques de luminance et chrominance de l'image obtenue sont transmises au circuit de découpage 3 qui réalise un découpage de chaque image en macroblocs, blocs de taille 16x16 pixels comprenant quatre blocs d'images 8x8 pixels conformément à la norme MPEG-2.

Le circuit d'interface 6 a pour rôle de convertir l'information de déplacement donnée par l'application, ici la synthèse d'image, en un champ de mouvement par macrobloc qui est transmis au circuit de compensation en mouvement 7. A chaque macrobloc est associé au moins un vecteur mouvement calculé par ce circuit d'interface à partir des données mathématiques de modélisation de la scène reçues du circuit de traitement 1. Les transformations mathématiques telles que translation, rotation, homothétie, ... sont traduites en vecteurs deux dimensions associés à chaque macrobloc.

Les vecteurs mouvement traduisent bien sûr le mouvement apparent des objets; prenant par exemple en compte le déplacement du point de vue de la scène.

Cette conversion du déplacement s'effectue de la façon suivante :
supposons que le déplacement est une translation d'un objet définie par un vecteur à trois dimensions dont la projection dans le plan de l'image donne un vecteur de coordonnées dans le plan (Dx,Dy). A tous les macroblocs d'image entiers représentant une partie de cet objet est associé ce même vecteur qui est considéré comme le vecteur mouvement (Dx, Dy) tel que défini dans la norme MPEG.

Reste alors les cas particuliers tels que macroblocs aux frontières d'objets, zones couvertes ou découvertes.

Pour ce qui concerne les blocs frontières, la solution la plus simple consiste à prendre le vecteur majoritaire dans le macrobloc, c'est-à-dire le vecteur qui correspond au plus grand nombre de pixels dans le macrobloc comme vecteur mouvement associé au macrobloc. Il est également envisageable de sélectionner le vecteur correspondant à l'objet plutôt que celui du fond. Ce choix n'est pas capital car le dispositif décrit possède un circuit de sélection de mode qui choisira le mode le mieux adapté, par exemple le mode intra si la reconstruction (donc le mouvement estimé) n'est pas bonne.

En ce qui concerne les macroblocs couverts/découverts, la solution la plus simple est d'affecter le mouvement nul au macrobloc sachant que les zones correspondant à ces macroblocs couverts ou découverts seront mal reconstruites. Une solution plus élaborée est fournie par la syntaxe MPEG-2 qui autorise pour les images B (Bidirectionnelles), des vecteurs avant et arrière. Ces deux types de vecteurs sont alors calculés par le circuit d'interface du mouvement 6 à partir des données fournies par le circuit de traitement 1 et sont donc considérés comme vecteurs mouvement avant et arrière associés au macrobloc traité. Alors, une zone découverte peut être reconstruite avec le mouvement vers l'avant (dans le temps), une zone couverte par le mouvement vers l'arrière. Le choix du mode de codage est ici aussi effectué par le circuit de sélection de mode.

La norme MPEG permet en effet d'affecter différents types de vecteurs à un macrobloc :
- les vecteurs de type monodirectionnel "avant" ou "arrière" (forward ou backward dans la norme MPEG) prenant en compte, respectivement une image antérieure et une image postérieure à celle correspondant au macrobloc traité ;
- les vecteurs de type bidirectionnel exploités dans le cas où le circuit de sélection de mode choisit le mode prédictif bidirectionnel. Il s'agit en fait de deux vecteurs associés au macrobloc, un vecteur avant et un vecteur arrière faisant correspondre, au macrobloc traité, un macrobloc qui est un moyennage des deux macroblocs définis par ces vecteurs, moyennage fonction des luminances des pixels mis en correspondance et des distances temporelles au macrobloc traité. Ces vecteurs peuvent être les mêmes que ceux définis précédemment.

Le circuit de compensation de mouvement 7 réalise, à partir des champs de vecteurs mouvement et des images précédentes (et suivantes) transmises par le circuit de calcul de rendu, les calculs d'images prédites, c'est-à-dire compensées en mouvement ainsi que le découpage des images ainsi obtenue en macroblocs.

Le macrobloc courant transmis par le circuit de découpage 3 est reçu sur l'entrée positive du soustracteur 4, le macrobloc correspondant de l'image prédite, transmis par le circuit de compensation 7 est reçu sur l'entrée négative du soustracteur. Le "résidu" disponible en sa sortie, macrobloc correspondant à la différence effectuée au niveau de chaque pixel, est transmis au circuit de sélection de mode 5.

En fait, à chaque type de vecteur mouvement précédemment défini correspond une image prédite calculée par le circuit de compensation. Ce circuit a donc autant de sorties n que de types de vecteurs choisis et chaque sortie est reliée à un soustracteur 4i recevant sur l'autre entrée le bloc courant de l'image. Tous les types de résidus calculés sont transmis au circuit de sélection de mode sur ses n entrées qui reçoit également, sur une autre entrée, le macrobloc courant, directement du circuit de découpage 3.

Le circuit de sélection de mode 5 détermine dans quel mode sera codé le macrobloc. Les modes de codage disponibles sont par exemple:
- codage avec compensation de mouvement ou sans compensation de mouvement, c'est-à-dire avec transmission de vecteur mouvement ou pas ;
- codage intra ou non-intra (codage inter-image, inter trame de même parité ou de parité différente, codage inter prédictif ou bidirectionnel prédictif, etc.) ;
- si codage non-intra, codage du résidu ou pas (dans le cas ou le résidu est très faible).

Le choix de mode est réalisé par le circuit de sélection de mode en effectuant un calcul d'énergie du macrobloc dans chaque mode et en choisissant celui qui donne l'énergie la plus faible. Dans la majorité des cas le calcul d'énergie est approximé avec des sommes de valeurs absolues.

Le bloc sélectionné subit ensuite une Transformation Cosinus Discrète, une quantification et un codage de type Codage en Longueur Variable. Le débit est prélevé en sortie du dispositif pour être transmis au quantificateur, cette boucle de régulation agissant sur le pas de quantification par l'intermédiaire d'un bloc de régulation de débit inclus dans le circuit de quantification par souci de simplification.

Les vecteurs associés au macrobloc traité sont transmis par le circuit de compensation en mouvement au circuit de codage en longueur variable 10 qui réalise un multiplexage de ces valeurs avec les coefficients quantifiés du macrobloc.

Il est bien sûr envisageable de simplifier ce dispositif, par exemple en limitant le type de macroblocs prédits transmis vers les soustracteurs. Le choix de mode serait alors partiellement réalisé en amont, par le circuit d'interface, lorsque ce dernier peut déduire, des informations qu'il possède, le mode qui permet la meilleure corrélation.

Le circuit d'interface transmet alors une information de mode sur une entrée supplémentaire du circuit de sélection de mode 5 pour imposer ce mode. Le circuit de sélection de mode est alors un circuit simplifié.

Un autre exemple de réalisation est décrit à la figure 2.

La sortie d'un circuit de traitement 11 est reliée en parallèle à l'entrée d'un circuit de calcul de rendu d'image 12 et à l'entrée d'un circuit d'interface du mouvement 13. Une liaison bidirectionnelle relie ces deux derniers circuits. La sortie du circuit de calcul de rendu d'image 12 est reliée à la sortie du dispositif à travers un circuit de calcul de Transformée Cosinus Discrète 14, un circuit de quantification 15, et un circuit de Codage en Longueur Variable 16 mis en série. La sortie du circuit de Codage en Longueur Variable, qui est la sortie du dispositif, est également renvoyée sur une deuxième entrée du circuit de quantification 15 pour constituer une boucle de régulation.

La sortie du circuit d'interface du mouvement 13 est reliée à une deuxième entrée du circuit de Codage en Longueur Variable 16.

Le circuit de traitement 11 a les mêmes caractéristiques et fonctions que celui décrit dans la figure 1.

Le calcul de rendu effectué par le circuit 12 est ici différent de celui décrit dans la figure 1 en ce sens qu'il est effectué par échantillonnage, c'est-à-dire pour une image toutes les N images d'une séquence d'images à transmettre.

L'image constituée par ce circuit est ensuite découpée en macroblocs et blocs d'images, fonction également réalisée par ce circuit de rendu d'image. Les blocs sont transmis successivement au circuit de calcul de la Transformée Cosinus Discrète 14 qui réalise la transformée cosinus de ces blocs, au circuit de quantification 15 qui effectue une quantification des coefficient transformés, une pondération et une sérialisation de ces coefficients et enfin au circuit de Codage en Longueur Variable 16 qui réalise un codage entropique des données sérialisées. La boucle de régulation prélève le débit en sortie du dispositif pour alimenter un circuit de régulation de débit, intégré dans le quantificateur 15, qui agit sur le pas de quantification pour effectuer une telle régulation.

Le circuit d'interface du mouvement 13 calcule les champs de vecteurs mouvement d'une manière analogue à celle décrite pour le circuit d'interface du mouvement 6 de la figure 1 et transmet au circuit de Codage en Longueur Variable le ou les vecteurs mouvement affectés au macrobloc courant traité. Il fournit également l'information de mode correspondant à ce ou ces vecteurs. Le circuit de codage réalise un multiplexage du vecteur mouvement associé au macrobloc courant avec le mode de codage et les données transformées et quantifiées de ce macrobloc pour transmettre l'ensemble en sortie du dispositif.

La liaison entre le circuit d'interface en mouvement 13 et le circuit de calcul de rendu 42 permet d'échanger les informations concernant le découpage en macroblocs, le macrobloc courant transmis au circuit DCT, le mode de codage, etc.

Le processus de rendu d'image, très consommateur de temps de calcul est donc ici simplifié. L'idée consiste à utiliser uniquement certaines images synthétiques et le mouvement entre les images alors manquantes. Les images synthétiques calculées sont espacées dans le temps (c'est-à-dire une image toutes les N périodes image) et représentent typiquement les images codées en intra par le codeur. Les images dites manquantes ne sont ni calculées, ni transmises, ni stockées. Le décodeur se charge de les créer à l'aide de l'information de mouvement qui lui est alors transmise. Ainsi tout se passe comme si le codeur était dans une configuration où les images d'erreur de prédiction étaient nulles (la prédiction compensée en mouvement est supprimée).

Le mode de codage transmis par le circuit 13 est fonction des images traitées par le circuit de rendu. Les images calculées correspondant à un codage en intra, les vecteurs mouvement pour ces images ne sont pas transmis. Les images intermédiaires sont considérées comme des images codées en inter avec une erreur de prédiction nulle (coefficients du macrobloc de résidu à zéro), le mouvement traduit par les vecteurs mouvement étant le mouvement réel calculé et non estimé et les images de synthèse étant supposées non bruitées. Au décodeur, ces images inter sont recréés à partir de l'image intra et des vecteurs mouvement transmis pour chaque image inter, comme indiqué précédemment.

Dans cette application, le mouvement par macrobloc (vecteur mouvement) peut être imprécis, les défauts sur les blocs frontière ne sont pas corrigés et l'illumination est supposée constante entre les images Intra. Un tel dispositif est réservé aux applications où la qualité d'images peut être moindre, telle les jeux vidéo. La vitesse de traitement, la compression de données et le faible coût de réalisation sont les caractéristiques imposées à de tels dispositifs, au détriment de la qualité d'image.

Dans une première amélioration de ce dispositif, en termes de qualité d'image, le mode de codage dépend du type de macrobloc traité. Un circuit d'interface d'erreur 17, représenté en pointillés sur la figure 2, est rajouté pour réaliser cette fonction nouvelle.

Ce circuit reçoit les informations du circuit de traitement 11 pour échanger avec le circuit de calcul de rendu d'image 12, les informations concernant le codage du macrobloc courant.

Son rôle est de détecter les erreurs qui ont principalement lieu sur les contours d'objets en mouvement. On prévoit un traitement spécifique pour les macroblocs concernés, Lorsque les macroblocs à transmettre sont des blocs frontière, information soit calculée par le circuit de calcul d'erreurs à partir des informations provenant du circuit de traitement 11, soit reçue du circuit d'interface en mouvement 13 via le circuit de calcul de rendu d'image, le circuit d'interface d'erreurs impose au circuit de calcul de rendu d'image, le calcul du rendu d'image pour ces blocs frontière. Le mode est alors forcé en intra pour ce macrobloc, information transmise au circuit d'interface du mouvement 13. Un calcul de rendu simplifié est donc effectué par le circuit de calcul de rendu d'image 12 pour les images codées en inter, pour ces seuls blocs de l'image.

Une deuxième amélioration du dispositif consiste en l'adjonction d'une interface illumination 18, représentée en pointillés sur la figure 2.

Cette interface illumination 18 reçoit les informations du circuit de traitement 11 pour échanger avec le circuit de calcul de rendu d'image 12, les informations concernant le codage du macrobloc courant.

La fonction de ce circuit est de convertir le modèle d'illumination en une image d'erreur pour le codeur. Le passage d'une information objet à une information adaptée au codage selon la norme MPEG se fait par exemple en considérant le changement d'illumination d'une image à l'autre comme étant une erreur de prédiction. Ainsi, l'interface illumination 18 transmet au circuit de calcul de rendu d'image 12 l'information liée à la variation de luminance du macrobloc traité d'une image à l'autre, information transmise ensuite par le circuit de rendu vers le circuit de calcul de DCT sous forme de bloc de résidu puisque considérée comme erreur de prédiction. L'interface en mouvement 13 transmet simultanément le vecteur mouvement calculé pour ce macrobloc traité et le type de mode correspondant. Au décodeur, le bloc reconstitué sera celui correspondant au vecteur mouvement auquel sera ajouté le bloc de résidu.

Une troisième amélioration du dispositif consiste à ajouter une interface région 19 qui permet de transmettre l'information de région au quantificateur 15.

Cette interface région 19 reçoit les informations du circuit de traitement 11, échange avec le circuit de calcul de rendu d'image 12, les informations concernant le codage du bloc courant et transmet des informations de région au quantificateur 15.

Cette interface découpe l'image en régions en fonction des informations de modélisation provenant du circuit de traitement 11. Un label est affecté à chaque région ou plus exactement à chaque bloc en fonction de la région à laquelle il appartient, les données concernant le découpage par bloc d'image provenant du circuit de calcul de rendu d'image 12. Le pas de quantification calculé par le circuit de quantification 15 est modifié en fonction de ce label, de manière à transmettre au décodeur une information de région "portée" par le pas de quantification. Cette modification peut être fonction des caractéristiques des régions : diminution du pas de quantification pour les régions non uniformes et/ou en faible mouvement, augmentation du pas de quantification pour les régions très texturées ou en fort mouvement. Ainsi, la qualité de l'image décodée est améliorée, pour un débit donné, tenant compte du fait que les défauts de blocs sont moins perceptibles pour les zones en fort mouvement ou fortement texturées.

Les mêmes techniques que pour les vecteurs mouvement peuvent être utilisées pour les cas ambigus d'appartenance : un bloc est déclaré appartenir à la région principale si celle-ci est majoritaire dans ce bloc (mode majoritaire), ou bien un bloc est déclaré appartenir à l'objet principal de l'image si cet objet fait partie, même partiellement, de ce bloc (mode objet principal).

Cette interface permet d'améliorer les performances et les applications possibles du codeur: amélioration subjective par exemple grâce à la diminution du pas de quantification pour des zones non uniformes ou en faible mouvement comme on vient de le voir, applications 2D ou 3D, amélioration de l'interactivité pour le décodeur grâce à l'information de région.

Bien sûr, il s'agit là d'exemples de réalisation et les différentes variantes peuvent être combinées ou prises séparément selon la qualité d'image désirée, l'application souhaitée, la rapidité de traitement ou le taux de compression désiré.

Ainsi le dispositif de la figure 2 peut très bien intégrer des fonctions du dispositif de la figure 1 et inversement. Par exemple, le circuit de calcul de rendu et de découpage en blocs d'image 12 peut également réaliser les fonctions des soustracteurs 4i pour le calcul de blocs différentiels ou blocs de résidu à partir des informations du circuit de compensation en mouvement 13 ainsi que les fonctions du sélecteur de mode pour fournir le bloc d'image au circuit DCT 14. Le nombre de modes de fonctionnement est ainsi augmenté, bien sûr au détriment de la complexité des circuits.

Les procédés et dispositifs décrits sont tout à fait compatibles des normes de compression de données de type MPEG pour ce qui concerne les données comprimées transmises comme pour le décodage.

Une application du présent brevet est la synthèse d'images que ce soit en production (studio virtuel, dessins animés, synthèse vidéo ou films, effets spéciaux), pour des jeux vidéo, pour des applications interactives, ou pour des applications de réalité virtuelle.

L'invention peut être mise en oeuvre dans des plates-formes intégrées (station de travail, console de jeux) étant donné le niveau de simplicité obtenu grâce à l'invention.

## Revendications

1. Procédé de compression de données numériques d'une séquence d'images de synthèse décrivant une scène objet d'un script, comportant une étape de traitement (1, 11) pour la modélisation de la scène à partir de données mathématiques, une étape de rendu d'image ("rendering" en anglo-saxon) pour la création d'une image de synthèse à partir de cette modélisation et un découpage en blocs d'image de cette image de synthèse (2, 12), un codage différentiel du bloc d'image courant à partir d'un bloc d'au moins une image de synthèse défini à partir d'au moins un vecteur mouvement pour fournir un bloc de résidu (4i), **caractérisé en ce que** le vecteur mouvement est calculé à partir des données mathématiques issues du script de synthèse et définissant le mouvement apparent des différents objets constituant la scène objet de la séquence.

2. Procédé selon la revendication 1, **caractérisé en ce que** le rendu d'image (2, 12) n'est effectué que pour une image sur N de la séquence, N étant un nombre prédéterminé, cette image étant codée en mode intra et **en ce que** le codage différentiel (4i) est effectué sur des blocs des images intermédiaires.

3. Procédé selon la revendication 2, **caractérisé en ce que** le bloc d'image courant à coder d'une image intermédiaire est identique au bloc de l'image de synthèse mis en correspondance par le vecteur mouvement pour fournir un bloc de résidu nul.

4. Procédé selon la revendication 1, 2 ou 3, **caractérisé en ce que** le codage des blocs d'image frontière d'une image est forcé en mode intra.

5. Procédé selon la revendication 1 ou 2, **caractérisé en ce que** l'information d'illumination pour le calcul de l'image de synthèse est exploitée (18) pour calculer un bloc de résidu (12) pour le codage inter du bloc courant en fonction de l'écart de luminance entre le bloc de l'image précédente mis en correspondance par le vecteur mouvement associé au bloc courant et le bloc courant.

6. Procédé selon l'une des revendications précédentes, **caractérisé en ce qu'**il réalise une segmentation de l'image (19), affecte un label à chacun des blocs de l'image, et modifie le pas de quantification (15) en fonction de ce label pour transmettre une information de région.

7. Procédé selon la revendication 6, **caractérisé en ce que** le pas de quantification (15) est augmenté pour les blocs appartenant à des régions fortement texturées ou en fort mouvement et diminué pour ceux appartenant à des régions uniformes ou en faible mouvement.

8. Dispositif de compression de données numériques d'une séquence d'images de synthèse décrivant une scène objet d'un script, comprenant un circuit de traitement (1, 11) pour la modélisation de la scène dont les images sont à synthétiser à partir de données mathématiques, un circuit de rendu d'image et de découpage en blocs de l'image (2, 12) recevant les informations du circuit de traitement (1, 11) pour la réalisation d'une image de synthèse et le découpage en blocs d'image de l'image obtenue, **caractérisé en ce qu'**il comporte un circuit d'interface de mouvement (6, 13) qui exploite les données mathématiques fournies par le circuit de traitement (1) et traduisant le déplacement des objets modélisés constituant la scène pour calculer au moins un vecteur mouvement associé à un bloc d'image et définissant un bloc prédit à partir duquel est effectué le codage du bloc d'image.

9. Dispositif selon la revendication 8, **caractérisé en ce qu'**il comporte un circuit de compensation de mouvement (7) des blocs d'image recevant les informations du circuit de traitement (1) et les vecteurs mouvement du circuit d'interface de mouvement (6) pour fournir des blocs prédits, un soustracteur (4i) pour effectuer la différence entre le bloc courant provenant du circuit de rendu d'image et de découpage en blocs d'image (2) et le bloc prédit provenant du circuit de compensation en mouvement (7) pour fournir un bloc de résidu, un circuit de transformation cosinus discrète (8) des blocs d'image provenant du circuit de rendu d'image et de découpage en blocs d'image (3) ou des blocs résidus provenant du soustracteur (4i), le choix étant effectué par un circuit de sélection de mode (5) en fonction de critères énergétiques.

10. Dispositif selon la revendication 8, **caractérisé en ce qu'**il transmet en mode intra une image parmi N images de la séquence, N étant un nombre prédéterminé, cette image étant celle objet du calcul de rendu par le circuit de calcul de rendu et de découpage en blocs d'image (12), **en ce que** d'autres images ou parties d'images sont transmises en mode inter par l'intermédiaire des seuls vecteurs mouvement définissant les blocs prédits et provenant du circuit d'interface de mouvement (13), le codage à partir de ces blocs correspondant à des blocs de valeur nulle.

11. Dispositif selon la revendication 8, **caractérisé en ce qu'**il transmet en mode intra une image parmi N images de la séquence. N étant un nombre prédéterminé, cette image étant celle objet du calcul de rendu par le circuit de calcul de rendu et de découpage en blocs d'image (12), **en ce que** d'autres images sont transmises en mode inter par l'Intermédiaire de blocs de résidu représentant la différence entre un bloc courant et un bloc prédit, et obtenus à partir d'un circuit d'interface illumination (18) dont la fonction est de calculer la différence d'illumination entre le bloc courant et le bloc prédit à partir des données mathématiques.

12. Dispositif selon la revendication 10 ou 11, **caractérisé en ce qu'**il comporte un circuit d'interface erreur (19) pour détecter l'erreur entre le bloc courant et le bloc prédit pour forcer en mode intra le codage des blocs courants lorsque l'erreur avec le bloc prédit dépasse un certain seuil.

13. Dispositif selon l'une des revendications 9 à 12, **caractérisé en ce que** les données numériques sont comprimées selon le format MPEG 2, le format MPEG 4, ou un format dérivé.

## Claims

1. Process for compressing digital data of a sequence of synthesis images describing a scene which is the subject of a script, comprising a processing step (1, 11) for modelling the scene on the basis of mathematical data, a step of image rendering for creating a synthesis image from this modelling and a partitioning of this synthesis image into image blocks (2, 12), a differential coding of the current image block on the basis of a block of at least one synthesis image, this block being defined on the basis of at least one motion vector, so as to provide a residual block (4i), **characterized in that** the motion vector is calculated from mathematical data emanating from the synthesis script and defining the apparent motion of the various objects constituting the scene which is the subject of the sequence.

2. Process according to Claim 1, **characterized in that** image rendering (2, 12) is performed for only one image out of N of the sequence, N being a predetermined number, this image being coded in intra mode and **in that** the differential coding (4i) is performed on blocks of the intermediate images.

3. Process according to Claim 2, **characterized in that** the current image block to be coded of an intermediate image is identical to the synthesis image block matched by the motion vector so as to provide a block with zero residual.

4. Process according to Claim 1, 2 or 3, **characterized in that** the coding of the boundary image blocks of an image is forced to intra mode.

5. Process according to Claim 1 or 2, **characterized in that** the illumination cue for calculating the synthesis image is utilized (18) to calculate a residual block (12) for the inter coding of the current block as a function of the disparity in luminance between the block of the previous image, matched by the motion vector associated with the current block, and the current block.

6. Process according to one of the preceding claims, **characterized in that** it effects a segmentation of the image (19), assigns a label to each of the blocks of the image, and modifies the quantization interval (15) as a function of this label so as to transmit a region cue.

7. Process according to Claim 6, **characterized in that** the quantization interval (15) is increased for the blocks belonging to regions which are highly textured or have large motion and decreased for those belonging to regions which are uniform or have small motion.

8. Device for compressing digital data of a sequence of synthesis images describing a scene which is the subject of a script, comprising a processing circuit (1, 11) for modelling the scene, the images of which are to be synthesized on the basis of mathematical data, a circuit for image rendering and for partitioning the image (2, 12) into blocks which receives the cues from the processing circuit (1, 11) for effecting a synthesis image and partitioning the image obtained into image blocks, **characterized in that** it comprises a motion interface circuit (6, 13) which utilizes the mathematical data provided by the processing circuit (1) and representing the displacement of the modelled objects constituting the scene so as to calculate at least one motion vector associated with an image block and defining a predicted block on the basis of which the coding of the image block is performed.

9. Device according to Claim 8, **characterized in that** it comprises an image blocks motion compensation circuit (7) receiving the cues from the processing circuit (1) and the motion vectors from the motion interface circuit (6) so as to provide predicted blocks, a subtractor (4i) for taking the difference between the current block originating from the circuit for image rendering and for partitioning into image blocks (2) and the predicted block originating from the motion compensation circuit (7) so as to provide a residual block, a discrete cosine transformation circuit (8) for the image blocks originating from the circuit for image rendering and for partitioning into image blocks (3) or residual blocks originating from the subtractor (4i), the choice being made by a mode selection circuit (5) as a function of energy criteria.

10. Device according to Claim 8, **characterized in that** it transmits in intra mode one image from among N images of the sequence, N being a predetermined number, this image being that which is the subject of the rendition calculation by the circuit for rendition calculation and for partitioning into image blocks (12), **in that** other images or parts of images are transmitted in inter mode by way of just the motion vectors defining the predicted blocks and originating from the motion interface circuit (13), the coding on the basis of these blocks corresponding to blocks of zero value.

11. Device according to Claim 8, **characterized in that** it transmits in intra mode one image from among N images of the sequence, N being a predetermined number, this image being that which is the subject of the rendition calculation by the circuit for rendition calculation and for partitioning into image blocks (12), **in that** other images are transmitted in inter mode by way of residual blocks representing the difference between a current block and a predicted block, and which are obtained from an illumination interface circuit (18) whose function is to calculate the difference in illumination between the current block and the block predicted on the basis of the mathematical data.

12. Device according to Claim 10 or 11, **characterized in that** it comprises an error interface circuit (19) for detecting the error between the current block and the predicted block so as to force the coding of the current blocks to intra mode when the error with the predicted block exceeds a certain threshold.

13. Device according to one of Claims 9 to 12, **characterized in that** the digital data are compressed according to the MPEG 2 format or a derived format.

## Patentansprüche

1. Verfahren zur Komprimierung von digitalen Daten einer Folge von synthetischen Bilder, die eine Szene beschreiben, die Gegenstand eines Skripts ist, mit einem Verarbeitungsschritt (1, 11) für die Modellierung der Szene aus mathematischen Daten, dem Schritt der der Bildwiedergabe ("rendering") für die Erzeugung eines synthetischen Bildes aus dieser Modellierung und einer Zerlegung des synthetischen Bildes (2, 12) in Bildblöcke, einer differentiellen Kodierung des laufenden Bildblocks aus einem Block wenigstens eines synthetischen Bildes, eine differenzielle Kodierung des laufenden Bildblocks aus einem Block wenigstens eines synthetischen Bildes, das aus wenigstens einem Bewegungsvektor definiert ist, um einen Restblock (4i) zu bilden,
**dadurch gekennzeichnet, daß**
der Bewegungsvektor aus mathematischen Daten berechnet wird, die aus dem Synthese-Skript hervorgehen und die erkennbare Bewegung der verschiedenen Objekte bilden, die die Szene darstellen, die Gegenstand der Folge ist.

2. Verfahren nach Anspruch 1, **dadurch gekennzeichnet, daß** die Bildwiedergabe (2, 12) nur für ein Bild von N der Folge erfolgt, wobei N eine vorbestimmte Zahl ist, daß dieses Bild im Intra-Modus kodiert wird und daß die differentielle Kodierung (4i) auf Blöcken der Zwischenbilder erfolgt.

3. Verfahren nach Anspruch 2, **dadurch gekennzeichnet, daß** der zu kodierende laufende Block eines Zwischenbildes identisch ist mit dem Block des synthetischen Bildes, der durch den Bewegungsvektor so angepaßt ist, daß er einen Block mit dem Restwert null bildet.

4. Verfahren nach Anspruch 1, 2 oder 3, **dadurch gekennzeichnet, daß** die Kodierung der Blöcke der Bildkanten eines Bildes im Intra-Modus erfolgt.

5. Verfahren nach Anspruch 1 oder 2, **dadurch gekennzeichnet, daß** die Helligkeitsinformation für die Berechnung des Synthesebildes durch Berechnung eines Restblocks (12) für die Inter-Kodierung des laufenden Blocks in Abhängigkeit von der Disparität in der Luminanz zwischen dem Block des vorangehenden Bildes, angepaßt an den Bewegungsvektor für den laufenden Block, und dem laufenden Block erfolgt (18).

6. Verfahren nach einem der vorangehenden Ansprüche, **dadurch gekennzeichnet, daß** es eine Segmentierung des Bildes (19) bewirkt, ein Label jedem der Bildblöcke zuordnet und den Quantisierschritt (15) in Abhängigkeit von dem Label bildet, um eine Information dieser Region zu übertragen.

7. Verfahren nach Anspruch 6, **dadurch gekennzeichnet, daß** der Quantisierschritt (15) für die Blöcke erhöht wird, die zu den stark texturierten Regionen gehören oder eine starke Bewegung aufweisen, und für diejenigen verringert wird, die zu ungleichmäßigen Regionen oder einer geringeren Bewegung gehören.

8. Vorrichtung zur Komprimierung von digitalen Daten einer Folge von Synthesebildern, die eine Szene beschreiben, die Gegenstand eines Skripts ist, mit einer Verarbeitungsschaltung (1, 11) zur Modellierung der Szene, deren Bilder aus den mathematischen Daten synthetisch hergestellt werden sollen, einer Schaltung zur Bildwiedergabe und zur Zerlegung des Bildes (2, 12) in Blöcke, die die Informationen der Verarbeitungsschaltung (1, 11) empfangen, für die Erzeugung eines Synthesebildes und die Zerlegung des gewonnenen Bildes in Bildblöcke, **gekennzeichnet durch** eine Bewegungs-Schnittstellenschaltung (6, 13), die die mathematischen Daten auswertet, die **durch** die Verarbeitungsschaltung geliefert werden und die Verschiebung der modellierten Objekte darstellen, die die Szene bilden, wenigstens einen Bewegungsvektor für einen Bildblock und einen vorausgesagten Block zu berechnen, aus dem die Kodierung des Bildblocks erfolgt.

9. Vorrichtung nach Anspruch 8, **gekennzeichnet durch** eine Schaltung (7) zur Bewegungskompensation der Bildblöcke, die die Informationen der Verarbeitungsschaltung (1) und die Bewegungsvektoren der Bewegungs-Schnittstellenschal-tung (6) empfängt, zur Lieferung von vorausgesagten Blöcken, einer Subtrahierstufe (4i) zur Bildung der Differenz zwischen dem laufenden Block von der Wiedergabeschaltung des Bildes und zur Zerlegung des Bildes in Blöcke (2) und dem vorausgesagten Block von der Schaltung zur Bewegungskompensation (7) zur Bildung des Restblocks, einer Schaltung (8) zur diskreten Cosinustransformation der Bildblöcke von der Schaltung zur Bildwiedergabe und zur Zerlegung des Bildes in Blöcke (3) oder der Restblöcke von der Subtrahierstufe (4i), wobei die Wahl **durch** eine Schaltung (5) zur Auswahl des Modus in Abhängigkeit von Energiekriterien erfolgt.

10. Vorrichtung nach Anspruch 8, **dadurch gekennzeichnet, daß** sie ein Bild von N Bilder der Folge im Intra-Modus überträgt, wobei N eine vorbestimmte Zahl ist und das Bild dasjenige ist, das Gegenstand der Berechnung der Wiedergabe durch die Berechnungsschaltung und der Zerlegung in Bildblöcke (12) ist, daß die anderen Bilder oder Teile von Bildern im Inter-Modus nur durch ihre Bewegungsvektoren übertragen werden, die die vorausgesagten Blöcke bilden und von der Bewegungs-Schnittstellenschaltung (13) kommen, wobei die Kodierung aus diesen Blöcken Blöcken mit dem Wert null entspricht.

11. Vorrichtung nach Anspruch 8, **dadurch gekennzeichnet, daß** sie im Intra-Modus ein Bild unter N Bildern der Folge überträgt, wobei N eine vorbestimmte Zahl ist und dieses Bild dasjenige ist, das Gegenstand der Wiedergabe durch die Berechnungsschaltung und der Zerlegung in Bildblöcke (12) ist, und daß andere Bilder im Inter-Modus durch Restblöcke übertragen werden, die die Differenz zwischen einem laufenden Block und einem vorausgesagten Block darstellen, und die aus einer Helligkeits-Schnittstellenschaltung (18) gewonnen werden, deren Aufgabe es ist, die Differenz in der Helligkeit zwischen dem laufenden Block und dem vorausgesagten Block aus den mathematischen Daten zu berechnen.

12. Vorrichtung nach Anspruch 10 oder 11, **dadurch gekennzeichnet, daß** sie eine Fehler-Schnittstellenschaltung (19) zur Detektierung des Fehlers zwischen dem laufenden Block und dem vorausgesagten Block aufweist, um die Kodierung der laufenden Blöcke in den Intra-Modus zu bringen, wenn der Fehler bei dem vorausgesagten Block einen bestimmten Schwellwert übersteigt.

13. Vorrichtung nach einem der Ansprüche 9 bis 12, **dadurch gekennzeichnet, daß** die digitalen Daten gemäß dem Format MPEG-2 oder einem abgeleiteten Format komprimiert werden.
